# EUROPÄISCHE PATENTANMELDUNG

(11) **EP 1 457 116 A1**
(43) Veröffentlichungstag der Anmeldung: **15.09.2004**
(21) Anmeldenummer: 04000832.8
(22) Anmeldetag: 16.01.2004
(51) Int. Cl.: A22C 15/00

(54) **Knüpferzunge für einen Knüpfer einer Schlaufenmaschine**

(30) Priorität: 14.03.2003 DE 10311203
(71) Anmelder: HERMANN WIEGAND GMBH, 36169 Rasdorf (DE)
(72) Erfinder: Wiegand, Karlheinz, 36169 Rasdorf (DE)
(74) Vertreter: Lelgemann, Karl-Heinz

(57) **Zusammenfassung**

Eine Knüpferzunge (1) für einen Knüpfer einer Schlaufenmaschine hat ein mittiges Gelenk (4), mittels dem die Knüpferzunge (1) über einen Verstellwinkel verschwenkbar im Knüpfer gelagert ist, einen Rollenarm (2), der auf der einen Seite des Gelenks (4) angeordnet ist und an seinem freien Endabschnitt (5) eine Rolle (6) drehbar lagert, die in Andruckberührung mit einem Schließer bringbar ist, und einen Gegenarm (3), der auf der anderen Seite des Gelenks (4) angeordnet ist.

Um die Knüpferzunge (1) stabiler und weniger verschleißanfällig zu gestalten, weist der Rollenarm (2) der Knüpferzunge (1) zwischen seinem freien Endabschnitt (5) und seinem gelenkseitigen Endabschnitt (7) einen Übergangsabschnitt (8) auf, in dem sich der Querschnitt des Rollenarms (2) in Richtung zum freien Endabschnitt (5) hin vergrößert.

## Beschreibung

Die Erfindung bezieht sich auf eine Knüpferzunge für einen Knüpfer einer Schlaufenmaschine, die Fleisch- bzw. Wurstverarbeitungszwecken dient.

Die Knüpferzunge hat ein mittiges Gelenk, mittels dem die Knüpferzunge über einen Verstellwinkel verschwenkbar im Knüpfer gelagert ist, einen Rollenarm, der auf der einen Seite des Gelenks angeordnet ist und an seinem freien Endabschnitt eine Rolle drehbar lagert, die in Andrückberührung mit einem Schließer bringbar ist, und einen Gegenarm, der auf der anderen Seite des Gelenks angeordnet ist.

Derartige Knüpferzungen werden im Betrieb vielfältig beansprucht, wobei insbesondere die am freien Endabschnitt gelagerte Rolle auf Biegung belastet wird, was dazu führt, dass derartige Knüpferzungen über eine vergleichsweise kurze Nutzungsdauer verfügen.

Der Erfindung liegt die Aufgabe zugrunde, die eingangs geschilderte gattungsgemäße Knüpferzunge derart weiterzubilden, dass sie einerseits stabiler und andererseits weniger verschleißanfällig ist.

Diese Aufgabe wird erfindungsgemäß dadurch gelöst, dass der Rollenarm der Knüpferzunge zwischen seinem freien Endabschnitt und seinem gelenkseitigen Endabschnitt einen Übergangsabschnitt aufweist, in dem sich der Querschnitt des Rollenarms in Richtung zum freien Endabschnitt hin vergrößert. Diese Ausgestaltung des Rollenarms der Knüpferzunge führt dazu, dass die Auswirkungen der auf die armfreien Endabschnitte des Rollenarms drehbar gelagerten Rolle ausgeübten Biegebeanspruchungen reduziert werden, wodurch sich eine längere Nutzungsdauer der Knüpferzunge ergibt.

Gemäß einer vorteilhaften Weiterbildung der erfindungsgemäßen Knüpferzunge weist deren Rollenarm im gelenkseitigen Endabschnitt einen etwa rechteckigen Querschnitt auf, der im Verlauf des Übergangsabschnitts allmählich in einen etwa kreisförmigen Querschnitt übergeht, wobei der Durchmesser des etwa kreisförmigen Querschnitts etwa der Länge der Längsseite des rechteckigen Querschnitts entspricht. Durch die Ausgestaltung des gelenkseitigen Endes des die Rolle lagernden freien Endabschnitts des Rollenarms mit einem kreisförmigen Querschnitt, kann eine definiertere und widerstandsfähigere Lagerung der mit Biegebeanspruchungen beaufschlagten Rolle erreicht werden.

Vorteilhaft geht der Rollenarm in seinem Übergangsabschnitt an beiden Längsseiten des etwa rechteckigen Querschnitts gleichmäßig in den etwa kreisförmigen Querschnitt über.

Um zu vermeiden, dass der Rollenarm der Knüpferzunge bei seiner Schwenkbewegung in unerwünschter Weise hoch über das Schließerblech geschwenkt wird, wodurch Fehlbindungen entstehen können, wird vorteilhaft am Rollenarm der erfindungsgemäßen Knüpferzunge ein Anschlag ausgebildet, mittels dem die Aufwärtsschwenkung des Rollenarms am Knüpfer begrenzt werden kann.

Dieser Anschlag weist vorteilhaft einen etwa halbzylindrischen Querschnitt auf, erstreckt sich über en Übergangsabschnitt des Rollenarms bis in den gelenkseitigen Endabschnitt desselben und ist am gelenkseitigen Rand des Übergangsabschnitts angeordnet.

Um die Beanspruchung der den Anschlag bewirkenden Elemente bzw. Abschnitte der Knüpferzunge einerseits und des Knüpfers andererseits zu reduzieren und den diesbezüglichen Verschleiß zu vermindern, weist der Rollenarm vorteilhaft auf beiden Seiten seines Übergangsabschnitts einen derartigen Anschlag auf.

Der Verschleiß kann weiter vermindert werden, wenn der Anschlag eine Anschlagfläche aufweist, die so orientiert ist, dass sie in flächige Anlage gegen einen knüpferseitigen Anschlagabschnitt gerät.

Im folgenden wird die Erfindung anhand einer Ausführungsform unter Bezugnahme auf die Zeichnung näher erläutert.

Es zeigen:
- Figur 1: eine Seitenansicht einer Ausführungsform einer erfindungsgemäßen Knüpferzunge;
- Figur 2: eine Ansicht der in Figur 1 gezeigten Ausführungsform der erfindungsgemäßen Knüpferzunge aus der Richtung A; und
- Figur 3: eine Ansicht der in Figur 1 gezeigten Ausführungsform der erfindungsgemäßen Knüpferzunge aus der Richtung B.

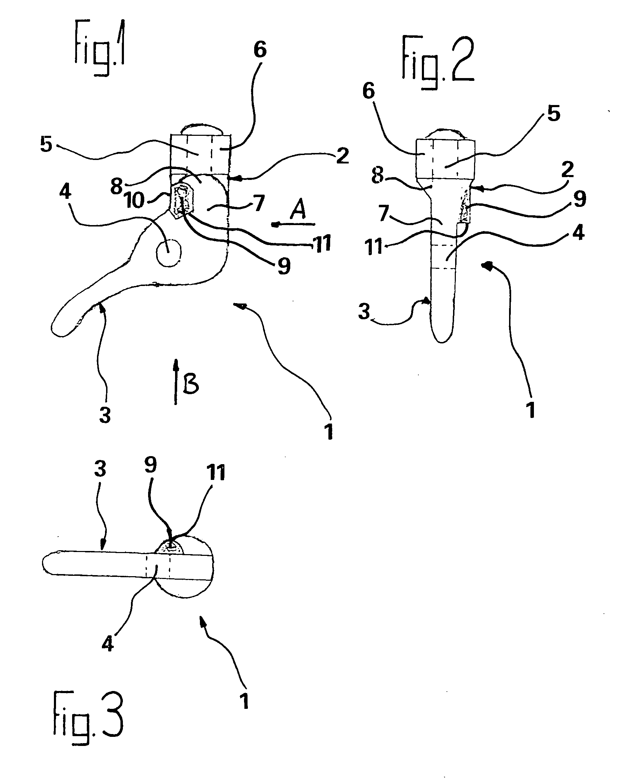

Eine in den Figuren 1 bis 3 in unterschiedlichen Ansichten gezeigte Knüpferzunge 1 dient dazu, im Zusammenwirken mit einem in den Figuren nicht dargestellten Knüpfer sowie einem ebenfalls in den Figuren nicht dargestellten Schließer einer Schlaufenmaschine Fleisch bzw. Wurst mit einem Geflecht zu versehen.

Die Knüpferzunge 1 gliedert sich in einen Rollenarm 2 und einen Gegenarm 3. Etwa mittig der Knüpferzunge 1 ist zwischen dem Rollenarm 2 und dem Gegenarm 3 ein knüpferzungenseitiges Gelenk 4 vorgesehen, welches im Zusammenwirken mit einem knüpferseitigen, in den Figuren nicht dargestellten Gelenkzapfen die Knüpferzunge 1 über einen Verstellwinkel verschwenkbar im Knüpfer lagert.

Der Rollenarm 2 der Knüpferzunge 1 hat einen gelenkfernen freien Endabschnitt 5, an dem eine Rolle 6 drehbar gelagert ist. Die Rolle ist in Andrückberührung mit einem in den Figuren nicht dargestellten Schließer bringbar.

Zwischen einem gelenkseitigen Endabschnitt 7 des Rollenarms 2 und dem freien Endabschnitt 5 desselben ist ein Übergangsabschnitt 8 ausgebildet. Im Verlauf des Übergangsabschnitts 8 des Rollenarms 2 vergrößert sich der Querschnitt des Rollenarms 2 von einem rechteckförmigen Querschnitt, den der Rollenarm 2 im Bereich seines gelenkseitigen Endabschnitts 7 aufweist, allmählich auf einen etwa kreisförmigen Querschnitt, den der Rollenarm 2 am Beginn seines freien Endabschnitts 5 aufweist. Die Vergrößerung des Querschnitts ist graduell gestaltet, wobei die Querschnittsvergrößerung auf beiden Längsseiten des rechteckförmigen Querschnitts des gelenkseitigen Endabschnitts 7 des Rollenarms 2 vorgenommen wird. Der Durchmesser des etwa kreisförmigen Querschnitts am Beginn des freien Endabschnitts 5 des Rollenarms 2 entspricht etwa der Längsseite des rechteckförmigen Querschnitts im Bereich des gelenkseitigen Endabschnitts 7 des Rollenarms 2. Die Querschnittsvergrößerung im Übergangsabschnitt 8 des Rollenarms 2 verhilft dazu, den Verschleiß der Knüpferzunge 1, der sich aufgrund der auf die Rolle 6 im Betrieb ausgeübten Biegebeanspruchung ergibt, zu reduzieren. Auch der aufgrund von Reibung auftretende Verschleiß wird reduziert.

Des weiteren ist die vorstehend geschilderte Knüpferzunge 1 - wie sich aus den Figuren 1 bis 3 ergibt - im dargestellten Ausführungsbeispiel auf einer Seite des Übergangsabschnitts 8 mit einem Anschlag 9 versehen, der sich bis in den gelenkseitigen Endabschnitt 7 erstreckt und am gelenknahen Rand 10 der Knüpferzunge 1 bzw. des Übergangsabschnitts 8 angeordnet ist. Der Anschlag 9 dient dazu, zu verhindern, dass die Knüpferzunge 1 mit ihrem Rollenarm 2 hoch über das in den Figuren nicht dargestellte Schließerblech schwenkt, so dass keine Fehlbindungen mehr entstehen.

Der Anschlag 9 weist eine Anschlagfläche 11 auf, die so orientiert ist, dass im Augenblick des Anschlags eine flächige Anlage zwischen der Anschlagfläche 11 des Anschlags 9 einerseits und einem Anschlagabschnitt des Knüpfers andererseits entsteht. Auch hierdurch wird der Verschleiß erheblich reduziert.

## Patentansprüche

1. Knüpferzunge für einen Knüpfer einer Schlaufenmaschine, mit einem mittigen Gelenk (4), mittels dem die Knüpferzunge (1) über einen Verstellwinkel verschwenkbar im Knüpfer gelagert ist, einem Rollenarm (2), der auf der einen Seite des Gelenks (4) angeordnet ist und an seinem freien Endabschnitt (5) eine Rolle (6) drehbar lagert, die in Andruckberührung mit einem Schließer bringbar ist, und einem Gegenarm (3), der auf der anderen Seite des Gelenks (4) angeordnet ist, **dadurch gekennzeichnet, dass** der Rollenarm (2) der Knüpferzunge (1) zwischen seinem freien Endabschnitt (5) und seinem gelenkseitigen Endabschnitt (7) einen Übergangsabschnitt (8) aufweist, in dem sich der Querschnitt des Rollenarms (2) in Richtung zum freien Endabschnitt (5) hin vergrößert.

2. Knüpferzunge nach Anspruch 1, deren Rollenarm (2) im gelenkseitigen Endabschnitt (7) einen etwa rechteckigen Querschnitt aufweist, der im Verlauf des Übergangsabschnitts (8) allmählich in einen etwa kreisförmigen Querschnitt übergeht, wobei der Durchmesser des etwa kreisförmigen Querschnitts etwa der Länge der Längsseite des rechteckigen Querschnitts entspricht.

3. Knüpferzunge nach Anspruch 2, deren Rollenarm (2) in seinem Übergangsabschnitt (8) an beiden Längsseiten des etwa rechteckigen Querschnitts gleichmäßig in den etwa kreisförmigen Querschnitt übergeht.

4. Knüpferzunge nach einem der Ansprüche 1 bis 3, an deren Rollenarm (2) ein Anschlag (9) ausgebildet ist, mittels dem die Aufwärtsschwenkung des Rollenarms (2) am Knüpfer begrenzbar ist.

5. Knüpferzunge nach Anspruch 4, deren Anschlag (9) einen etwa halbzylindrischen Querschnitt aufweist, sich über den Übergangsabschnitt (8) des Rollenarms (2) bis in den gelenkseitigen Endabschnitt (7) desselben erstreckt und am gelenknahen Rand des Übergangsabschnitts (8) angeordnet ist.

6. Knüpferzunge nach einem der Ansprüche 1 bis 5, deren Rollenarm (2) auf beiden Seiten seines Übergangsabschnitts (8) einen Anschlag aufweist.

7. Knüpferzunge nach einem der Ansprüche 4 bis 6, deren Anschlag (9) eine Anschlagfläche (11) aufweist, die so orientiert ist, dass sie in flächige Anlage gegen einen knüpferseitigen Anschlagabschnitt gerät.
